Europäisches Patentamt

European Patent Office

Office européen des brevets

(11) Veröffentlichungsnummer: **0 482 312 A1**

## (12) EUROPÄISCHE PATENTANMELDUNG

(21) Anmeldenummer: **91113882.4**

(22) Anmeldetag: **20.08.91**

(51) Int. Cl.5: **C01B 33/107**

(30) Priorität: **23.10.90 DE 4033611**

(43) Veröffentlichungstag der Anmeldung:
**29.04.92 Patentblatt 92/18**

(84) Benannte Vertragsstaaten:
**BE DE FR GB IT NL SE**

(71) Anmelder: **HÜLS AKTIENGESELLSCHAFT
Patentabteilung / PB 15 - Postfach 13 20
W-4370 Marl 1(DE)**

(72) Erfinder: **Ruff, Klaus
Im Grund 7b
W-5210 Troisdorf(DE)**

(54) Verfahren zur Gewinnung von chloridarmer Ofenasche bei der Umsetzung von Rohsilicium zu Chlorsilanen.

(57) Beim Verfahren zur Gewinnung chloridarmer Ofenasche als Reaktionsrückstand bei der Umsetzung von Rohsilicium mit Chlorwasserstoff und/oder Chlor wird der Chloridgehalt der Asche dadurch herabgesetzt, daß man die Ofenasche dem weiteren Kontakt mit dem Chlorierungsmittel entzieht.

EP 0 482 312 A1

Gegenstand der vorliegenden Erfindung ist ein Verfahren zur Gewinnung von chloridarmer Ofenasche bei der Umsetzung von Rohsilicium mit Chlorwasserstoff und/oder Chlor zu Chlorsilanen. Als Beaktionsrückstand muß die Ofenasche umweltgerecht entsorgt werden; dazu liefert das vorliegende Verfahren einen Beitrag.

Bei der industriellen Herstellung von Chlorsilanen wird Rohsilicium als Feststoff in Beaktionsöfen eingesetzt. Diese können als Fluid-Bett-Reaktoren oder Festbettreaktoren ausgebildet sein. Das feste Rohsilicium liegt dabei auf einer für einen Gasdurchtritt geeigneten Auflage, wie z. B. einem Lochboden beim Fluid-Bett oder einem, Auflagerost beim Festbett. Das Reaktionsgas (Chlorwasserstoff und/oder Chlor) tritt von unten durch den Auflageboden in den Rohsiliciumfeststoff ein und reagiert dort zu Chlorsilanen, die über Kopf den Reaktor gasförmig verlassen. Die für die Herstellung von Chlorsilanen eingesetzten Reaktoren sind schematisch in DE-AS 21 61 641, DE-OS 32 30 590 und DE-PS 26 30 542 dargestellt.

Bei den zur Herstellung von Chlorsilanen eingesetzten Rohsiliciumsorten beträgt der Siliciumgehalt 85 Gew.-% und mehr. Kommerziell sind heute Siliciumsorten mit bis zu 99 Gew.-% Silicium erhältlich. Die weiteren Bestandteile des Siliciums sind hauptsächlich Eisen, Aluminium, Calcium und Titan; in geringen Mengen sind aber auch noch andere Elemente, meist Metalle, enthalten.

Bei der Umsetzung von Rohsilicium in den Reaktionsöfen bleibt ein Feststoff zurück, der im folgenden als Ofenasche bezeichnet wird. Die Ofenasche enthält die nicht umgesetzten Bestandteile und schwerflüchtige Chlorverbindungen des Rohsiliciums. Ihre Elementaranalyse zeigt vornehmlich Silicium, Eisen, Calcium, Aluminium, Magnesium, Kohlenstoff und Chlor. Das Chlor liegt als wasserlösliches Chlorid vor.

Um die Reaktion des Rohsiliciums in Gang zu halten, muß die Ofenasche aus dem Reaktionsofen entfernt werden. Üblicherweise fällt die Ofenasche nach unten durch die Gasöffnungen in einen unter dem Auflageboden befindlichen Raum, in dem sie abkühlt. Das Entaschen der Reaktoren kann kontinuierlich oder diskontinuierlich erfolgen und durch mechanische Mittel, z. B. einen beweglichen Rost, unterstützt werden.

Bei den heute gebräuchlichen Anordnungen zur Aschegewinnung aus den Reaktionsöfen ist es üblich, die Asche nach unten durch die Gaseintrittsöffnungen des Auflagebodens abzuziehen und in einer mit dem Gasraum unterhalb des Auflagebodens verbundenen Kammer zu sammeln und abkühlen zu lassen. Der Gasraum ist dabei naturgemäß mit dem Chlorierungsgas Chlorwasserstoff und/oder Chlor gefüllt. Diese Anordnung ist nachteilig für einen geringen Chloridgehalt der Ofenasche.

Als für die weitere Produktion von Chlorsilanen nicht weiter verwendbarer Rückstand muß die Ofenasche entsorgt werden. Um diese als Abfall einer oberirdischen Deponie zuführen zu können, sollen die Zuordnungskriterien erfüllt sein, wie sie im Entwurf des Bundesministers für Umwelt, Naturschutz und Reaktorsicherheit der Bundesrepublik Deutschland für die Dritte Allgemeine Verwaltungsvorschrift zum Abfallgesetz - Technische Anleitung zur Lagerung, chemisch/physikalischen und biologischen Behandlung, Verbrennung und Ablagerung von Sonderabfällen (Entwurf TA Sonderabfall) mit dem Aktenzeichen WA II 5-530 400-1/18 enthalten sind. Ofenasche aus der Chlorsilanproduktion erfüllt die im Anhang D des Entwurfes TA Sonderabfall enthaltenen Zuordnungskriterien mit Ausnahme von Chlorid. Während der Entwurf TA Sonderabfall bei Chlorid einen Grenzwert von 6 g/l Eluat, entsprechend 6 Gew.-%, bezogen auf Ofenasche, vorschreibt, ergeben die Analysen von Ofenasche Chloridgehalte von 8 bis 20 Gew.-%.

Es bestand somit das Problem, eine Ofenasche mit geringem Chloridgehalt zu erzeugen, die einer oberirdischen Deponie zugeführt werden kann, um so in wirtschaftlich vorteilhafter Weise die Inanspruchnahme einer Untertagedeponie zu vermeiden.

Als Lösung dieses Problems wurde ein Verfahren zur Gewinnung von chloridarmer Ofenasche als Reaktionsrückstand bei der Umsetzung von Rohsilicium zu Chlorsilanen gefunden, bei welchem man die Ofenasche unmittelbar nach Austritt aus dem Reaktionsraum dem weiteren Kontakt mit dem Chlorierungsmittel entzieht.

Erfindungsgemäß ist es wesentlich, die Ofenasche in einer Atmosphäre zu sammeln und gegebenenfalls abkühlen zu lassen, die weder Chlorwasserstoff noch elementares Chlor enthält. Da ein Teil der Ofenasche unter Umständen in den Prozeß zurückgeführt wird, ist die Abwesenheit von Wasserdampf und Sauerstoff hierbei eine weitere sinnvolle Maßnahme.

Bezüglich der Behandlung der Ofenasche kann man z. B. beim periodischen Entaschen die anfallende Ofenasche in einer unterhalb des Auflagebodens installierten Kammer auffangen, die Kammer sofort nach Ende des Entaschungsvorgangs schließen, das in der Kammer enthaltene Chlorierungsgas entfernen und durch Stickstoff ersetzen.

Um die Kontaktzeit der Ofenasche mit dem Chlorierungsgas zu verkürzen, wird vorteilhafterweise eine unterhalb des Auflagebodens befindliche Sammelkammer mit einem Gas gefüllt, das spezifisch schwerer als das Chlorierungsgas ist. Auf diese Weise fällt die Ofenasche mit Ausnahme einer kurzen Strecke unterhalb des Auflagebodens sofort in eine chlorierungsgasfreie Atmosphäre und ist durch diese vom Chlorierungsmittel abgesperrt.

Als schweres Sperrgas kann man alle inerten chlorierungsmittelfreien Gase und Dämpfe verwenden, wie z. B. Argon im Falle von Chlorwasserstoff als Chlorierungsgas. Mit Vorteil jedoch werden chlorsilanhaltige, insbesondere $SiCl_4$-haltige, gasförmige Verbindungen eingesetzt. Durch Rückführung entsprechender Gasströme aus der Chlorsilananlage werden somit keine prozeßfremden chemischen Verbindungen eingeschleust. Auch die Absperrung der Ofenasche allein mit $SiCl_4$-Dämpfen ist eine vorteilhafte Ausgestaltung des Verfahrens.

Beispiel 1

In einem Reaktionsrohr wurden in einem Quarzschiffchen 10 g Rohsilicium in einer Körnung von 0 bis 5 mm mit einem Siliciumgehalt von 90,5 Gew.-% mit Chlorwasserstoff zu Chlorsilanen umgesetzt. Die Reaktionstemperatur betrug 750 °C. Nach 100 Minuten Reaktionszeit verblieb im Schiffchen ein Reaktionsrückstand von 2,3 g. Das Schiffchen wurde in weniger als 3 Sekunden in eine unmittelbar an das Reaktionsrohr anschließende Abkühlkammer gebracht, die mit $SiCl_4$-Dampf bei 120 °C gefüllt war. Dort kühlte das Schiffchen unter $SiCl_4$-Atmosphäre in 40 Minuten auf 70 °C ab, wobei die Temperatur der Abkühlkammer gesenkt wurde. Der Chloridgehalt einer so gewonnenen Ofenasche betrug 1,6 Gew.-%.

Vergleichsbeispiel 1

Der Versuch nach Beispiel 1 wurde wiederholt mit der Änderung, daß die Ofenasche unter HCl-Atmosphäre abkühlte. Der Chloridgehalt der so abgekühlten Ofenasche wurde zu 10,1 Gew.-% gemessen.

Beispiel 2

Der Versuch nach Beispiel 1 wurde wiederholt mit der Änderung, daß die Ofenasche unter Argon-Atmosphäre abkühlte. Die Asche hatte danach einen Chloridgehalt von 1,5 Gew.-%.

Beispiel 3

Bei einer Reaktionstemperatur von 900 °C wurde der Versuch nach Beispiel 1 wiederholt und unter $SiCl_4$-Atmosphäre abgekühlt. Man erhielt eine Ofenasche mit 1,0 Gew.-% Chloridgehalt. Kühlte man unter Argon ab, erhielt man ebenfalls 1,0 Gew.-% Chlorid in der Ofenasche.

Beispiel 4

In derselben Apparatur und gemäß derselben Verfahrensweise wie in Beispiel 1 wurden 10 g Rohsilicium mit Chlor bei 900 °C umgesetzt, bis ein Rückstand von 2,3 g verblieb. Dieser Rückstand wurde in einer $SiCl_4$-Atmosphäre abgekühlt. Der Chloridgehalt der Ofenasche betrug 1,7 Gew.-%.

Vergleichsbeispiel 2

Der Versuch nach Beispiel 4 wurde mit der Änderung wiederholt, daß die Ofenasche unter Chlor-Atmosphäre abkühlte. Die Asche hatte einen Chloridgehalt von 15,9 Gew.-%.

**Patentansprüche**

1. Verfahren zur Gewinnung von chloridarmer Ofenasche als Reaktionsrückstand bei der Umsetzung von Rohsilicium zu Chlorsilanen, dadurch gekennzeichnet, daß man die Ofenasche unmittelbar nach Austritt aus dem Reaktionsraum dem weiteren Kontakt mit dem Chlorierungsmittel entzieht.

2. Verfahren nach Anspruch 1, dadurch gekennzeichnet, daß man die Ofenasche in einer chlorierungsmittelfreien Atmosphäre sammelt, die spezifisch schwerer als das Chlorierungsgas ist.

3. Verfahren nach Anspruch 1 oder 2, dadurch gekennzeichnet, daß man die Ofenasche in einer Atmosphäre aus $SiCl_4$-Dampf auffängt.

Europäisches
Patentamt

**EUROPÄISCHER
RECHERCHENBERICHT**

Nummer der Anmeldung

**EP 91 11 3882**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-A-3 230 590 (NIPPON AEROSIL CO)<br>* Seite 8, Zeile 13 - Seite 15, Zeile 13 *<br>– – – | 1 | C 01 B 33/107 |
| A,D | DE-A-2 630 542 (DYNAMIT NOBEL AG)<br>* Seite 7, Zeile 7 - Seite 8, Zeile 2 *<br>– – – | 1 | |
| A,D | DE-B-2 161 641 (DEUTSCHE GOLD UND SILBER SCHEI-<br>DEANSTALT)<br>* Beispiel 1 *<br>– – – – – | 1 | |

**RECHERCHIERTE
SACHGEBIETE (Int. Cl.5)**

C 01 B 33/08
C 01 B 33/107

Der vorliegende Recherchenbericht wurde für alle Patentansprüche erstellt

| Recherchenort | Abschlußdatum der Recherche | Prüfer |
|---|---|---|
| Berlin | 16 Dezember 91 | CLEMENT J.P. |